# DEMANDE DE BREVET EUROPEEN

(11) **EP 1 764 634 A1**
(43) Date de publication de la demande: **21.03.2007**
(21) Numéro de dépôt: 06076576.5
(22) Date de dépôt: 15.08.2006
(51) Int. Cl.: G02B 6/02, G02B 6/293, H04B 10/18

(54) **Fibre de compensation de la dispersion chromatique et de la pente de dispersion cumulées**

(30) Priorité: 20.09.2005 FR 0509577
(71) Demandeur: Draka Comteq B.V., 1021 JZ Amsterdam (NL)
(72) Inventeur: Sillard, Pierre, 78150 Le Chesnay (FR); Antona, Jean-Christophe, 92120 Montrouge (FR)
(74) Mandataire: Van kan, Johan Joseph Hubert

(57) **Abrégé**

Une fibre optique multimode présente un profil d'indice tel que, pour un mode de propagation autre que le mode fondamental et pour une longueur d'onde de 1550 nm, la fibre présente une dispersion chromatique positive supérieure ou égale à 50 ps/nm/km et une pente de dispersion chromatique positive. La fibre présente en outre un facteur de mérite (FOM) supérieur ou égal à 200 ps/nm/dB.

Une telle fibre permet de rattraper une surcompensation en bout de ligne ou en entrée de noeud d'un système optique avec des pertes limitées.

## Description

La présente invention concerne le domaine des transmissions par fibre optique, et plus spécifiquement, la compensation de la dispersion chromatique et de la pente de dispersion chromatique cumulées dans des systèmes de transmission par fibre optique.

Pour des fibres optiques, on qualifie généralement le profil d'indice en fonction de l'allure du graphe de la fonction qui associe au rayon de la fibre l'indice de réfraction. On représente de façon classique sur les abscisses la distance r au centre de la fibre, et sur les ordonnées la différence entre l'indice de réfraction et l'indice de réfraction de la gaine de la fibre. On parle ainsi de profil d'indice en "échelon", en "trapèze" ou en "triangle" pour des graphes qui présentent des formes respectives d'échelon, de trapèze ou de triangle. Ces courbes sont généralement représentatives du profil théorique ou de consigne de la fibre, les contraintes de fabrication de la fibre pouvant conduire à un profil sensiblement différent.

Une fibre optique est classiquement composée d'un coeur optique, ayant pour fonction de transmettre et éventuellement d'amplifier un signal optique, et d'une gaine optique, ayant pour fonction de confiner le signal optique dans le coeur. A cet effet, les indices de réfraction du coeur n_{c} et de la gaine externe n_{g} sont tels que n_{c}>n_{g}. Comme cela est bien connu, la propagation d'un signal optique dans une fibre optique monomode se décompose en un mode fondamental guidé dans le coeur et en des modes secondaires guidés sur une certaine distance dans l'ensemble coeur-gaine.

Dans les nouveaux réseaux de transmission à hauts débits et multiplexés en longueur d'onde, il est avantageux de gérer la dispersion chromatique, notamment pour des débits supérieurs ou égaux à 10Gbit/s. L'objectif est d'obtenir, pour toutes les valeurs de longueur d'onde du multiplex, une dispersion chromatique cumulée sensiblement nulle sur la liaison, de sorte à limiter l'élargissement des impulsions et l'interférence qui en découle. On appelle "dispersion chromatique cumulée" l'intégrale de la dispersion chromatique locale sur la longueur de la fibre; à dispersion chromatique constante, la dispersion chromatique cumulée est égale au produit de la dispersion chromatique par la longueur de la fibre. Une valeur cumulée de quelques dizaines de ps/nm pour la dispersion est en général acceptable à 40Gb/s, quelques centaines à 10Gb/s. Il est aussi intéressant d'éviter au voisinage des longueurs d'onde utilisées dans le système les valeurs nulles de la dispersion chromatique locale, pour lesquelles les effets non-linéaires sont plus importants. Enfin, il est aussi intéressant de limiter la pente de dispersion chromatique cumulée sur la plage du multiplex de sorte à éviter ou limiter les distorsions entre les canaux du multiplex. Cette pente est classiquement la dérivée de la dispersion chromatique locale ou cumulée par rapport à la longueur d'onde.

On utilise classiquement comme fibre de ligne pour les systèmes de transmission à fibres optiques des fibres à saut d'indice, appelées aussi fibres SMF (acronyme de l'anglais "Single Mode Fiber") ou des fibres à dispersion décalée, appelées aussi fibres NZDSF+ (acronyme de l'anglais "Non-Zero Dispersion shifted Fiber"). On qualifie de NZDSF+ des fibres à dispersion décalée, présentant une dispersion chromatique non nulle et positive pour les longueurs d'onde auxquelles elles sont utilisées, typiquement autour de 1550 nm. Ces fibres présentent pour ces longueurs d'onde une dispersion chromatique positive faible, typiquement inférieure à 10 ps/(nm.km) à 1550 nm, et une pente locale de dispersion chromatique positive comprise entre 0,04 et 0,1ps/(nm².km).

Pour compenser la dispersion chromatique et la pente de dispersion chromatique dans des fibres SMF ou NZDSF+ utilisées comme fibres de ligne, on peut utiliser des faibles longueurs de fibre de compensation de dispersion, appelées aussi DCF ("Dispersion Compensating Fiber" en langue anglaise) ; une telle fibre présentera alors une dispersion chromatique négative et une pente de dispersion chromatique négative. Dans le choix de la fibre DCF, on cherche en général à ce que le rapport de la dispersion chromatique sur la pente de dispersion de la fibre de compensation soit sensiblement égal à celui de la fibre de ligne. Ce rapport est désigné sous l'acronyme DOS (de l'anglais "Dispersion Over Slope" ratio).

US-A-5 568 583 ou US-A-5 361 319 décrivent des fibres DCF pour la compensation de la dispersion chromatique de fibres SMF et EP-A-1 067 412 décrit une fibre DCF pour la compensation de la dispersion chromatique de fibres NZDSF. Ces fibres DCF connues présentent, à une longueur d'onde de 1550 nm, une dispersion chromatique négative et une pente de dispersion chromatique négative.

Les systèmes optiques multiplexés en longueur d'onde, dits WDM pour « Wavelength Division Multiplexing », sont généralement composés d'une concaténation de sections de fibre de ligne - SMF, NZDSF ou autre - avec des modules de compensation de dispersion intercalés entre les sections de fibre de ligne et comprenant des sections de DCF enroulées. La manière dont les modules de compensation de dispersion sont répartis le long de la ligne de transmission est appelée gestion de la dispersion ; cette gestion vise à limiter à la fois les effets non linéaires et la dispersion cumulée en bout de ligne. On cherche en effet toujours à atteindre, en bout de ligne, une dispersion chromatique cumulée faible et une pente de dispersion cumulés nulle.

Dans ce contexte, on appelle « section de ligne de transmission » une partie d'un système de transmission optique reliant un élément émetteur à un élément récepteur, ces éléments pouvant être situés en extrémité de ligne ou dans des noeuds du système optique. Une section de ligne comprend donc une ou plusieurs sections de fibre de ligne concaténées et une ou plusieurs sections de fibre de compensation de dispersion réparties entre les sections de fibre de ligne. Les sections de fibre de ligne génèrent classiquement une dispersion chromatique positive avec une pente de dispersion chromatique positive alors que les sections de fibre de compensation génèrent une dispersion chromatique négative avec une pente de dispersion chromatique négative. En cas de surcompensation, la section de ligne présentera donc une dispersion chromatique avec une pente de dispersion chromatique cumulées négatives qu'il est nécessaire de rattraper pour parvenir à une dispersion nulle en entrée de noeud ou en extrémité de ligne.

De fait, il est parfois avantageux d'introduire une surcompensation le long de la ligne de transmission, par exemple pour limiter les effets non linéaires dans la fibre de ligne. On a aussi constaté qu'une surcompensation de la dispersion chromatique réduisait le taux d'erreur au niveau des récepteurs. Par exemple l'article « Investigation of Advanced Dispersion Management Techniques for Ultra-Long Haul Transmissions » écrit par J.-C. Antona, M. Lefrançois, S. Bigo, et G. Le Meur, présenté en Septembre 2005 à la conférence ECOC'05 (European Conference for Optical Communications) indique qu'une surcompensation en cours de transmission, illustrée par une dispersion résiduelle par subdivision ou par section de fibre de ligne négative dans l'article, permet améliorer la performance de systèmes WDM à 10Gb/s. Cependant, en bout de ligne et/ou à chaque noeud du système de transmission, la dispersion chromatique cumulée doit être ramenée à zéro ou légèrement positive. Or, si le signal optique a été surcompensé, en bout de ligne, la dispersion chromatique et la pente de la dispersion seront négatives ; il est alors nécessaire pour rattraper cette surcompensation d'utiliser un bout de fibre ayant une dispersion positive et une pente de dispersion positive. A cet effet, on utilise souvent des sections de fibres SMF standard (SSMF) ou de fibres à coeur de silice pure (PSCF, pour « Pure Silica Core Fiber » en anglais).

L'inconvénient majeur à l'utilisation d'une section de SSMF pour rattraper la surcompensation est que la SSMF induit de fortes pertes par rapport à la quantité de dispersion apportée. Cette caractéristique est généralement déterminée par le facteur de mérite (désigné par l'acronyme FOM pour "Figure of Merit" en anglais). Le facteur de mérite FOM est défini comme le rapport de la dispersion chromatique D, en valeur absolue, sur l'atténuation du signal en dB/km. Pour une SSMF, le FOM est de l'ordre de 85 ps/nm/dB. Les fibres PSCF induisent moins de pertes optiques et présentent un FOM de l'ordre de 125 ps/nm/dB, mais elles sont onéreuses.

US-A-6 724 964 décrit des fibres optiques présentant des profils d'indice tels que les fibres présentent, pour un mode de propagation d'ordre supérieur, une dispersion chromatique positive. Les profils décrits dans cette demande génèrent une dispersion chromatique positive et une pente de dispersion positive, nulle ou négative. Les fibres décrites dans ce document sont utilisées pour compenser la dispersion de fibres de ligne présentant une dispersion chromatique négative. En effet, les valeurs de dispersion des fibres décrites sont très élevées, de l'ordre de 500 ps/mn/km à 1550 nm. En outre, les fibres décrites dans ce document ne présentent pas une pente de dispersion chromatique positive sur l'ensemble de la bande spectrale utilisée ; en particulier à 1550 nm, les pentes de dispersion des fibres illustrées sont toutes négatives. Les fibres décrites dans US-A-6 724 964 ne pourraient donc pas être utilisées pour rattraper une surcompensation de section de ligne présentant une dispersion chromatique et une pente de dispersion chromatique cumulées négatives.

US-A-2003/0202761 décrit une fibre présentant, pour un mode de propagation autre que le mode fondamental, une dispersion chromatique positive et une pente de dispersion chromatique négative. Cette fibre de compensation est particulièrement adaptée à la compensation d'une fibre de ligne présentant une dispersion chromatique négative avec une pente de dispersion chromatique positive, telle que la fibre commercialisée par Corning sous la marque Corning LS®. La fibre décrite dans US-A-2003/0202761 n'est donc pas adaptée à rattraper une surcompensation de section de ligne présentant une dispersion chromatique et une pente de dispersion chromatique cumulées négatives.

Il existe donc un besoin pour une fibre de compensation de dispersion chromatique qui permette de rattraper la surcompensation en bout de ligne ou en entrée de noeud d'un système optique et qui présente un facteur de mérite FOM plus élevé que celui d'une SSMF ou d'une PSCF.

A cet effet, l'invention propose d'utiliser une fibre faiblement multimode qui présente, pour un mode de propagation autre que le mode fondamental, une dispersion chromatique positive et une pente de dispersion chromatique positive avec un facteur de mérite supérieur à 200 ps/nm/dB.

L'invention propose plus particulièrement une fibre optique multimode présentant un profil d'indice tel que, pour un mode de propagation autre que le mode fondamental, la fibre présente, pour une longueur d'onde de 1550 nm :
- une dispersion chromatique positive supérieure ou égale à 50 ps/nm/km ;
- une pente de dispersion chromatique positive,
- un facteur de mérite (FOM) supérieur ou égal à 200 ps/nm/dB.

Selon les modes de réalisation, la fibre selon l'invention peut présenter une
ou plusieurs des caracétristiques suivantes :
- un rapport de dispersion chromatique sur la pente de dispersion chromatique (DOS) supérieur ou égal à 40 nm, pour un mode d'ordre supérieur à une longueur d'onde de 1550 nm.
- une dispersion chromatique positive supérieure ou égale à 150 ps/nm/km, pour un mode d'ordre supérieur à une longueur d'onde de 1550 nm.
- une pente de dispersion chromatique positive sur l'ensemble de la bande spectrale utilisée, pour un mode de propagation d'ordre supérieur ; la bande spectrale peut être choisie dans la bande C, la bande L, la bande S ou la bande U.
- une surface effective supérieure ou égale à 100 µm², pour un mode de propagation d'ordre supérieur à une longueur d'onde de 1550 nm.
- une longueur d'onde de coupure effective supérieure à 2000 nm, pour le mode LP₀₂,.

L'invention concerne aussi un module de compensation de dispersion chromatique adapté à rattraper la surcompensation d'un signal optique se propageant selon un mode fondamental dans une section de ligne de transmission comprenant une fibre de ligne à dispersion chromatique positive et pente de dispersion chromatique positive, le module comprenant :
- un premier convertisseur de mode adapté à convertir le mode fondamental en mode d'ordre supérieur ;
- une section de fibre multimode selon l'invention ;
- un second convertisseur de mode adapté à convertir le mode d'ordre supérieur en mode fondamental.

Selon les modes de réalisation, le module de compensation de dispersion d el'invention présente une ou plusieurs des caractéristiques suivantes :
- le rapport de dispersion chromatique sur la pente de dispersion chromatique (DOS) de la fibre multimode est sensiblement égal au rapport de dispersion chromatique sur la pente de dispersion chromatique (DOS) de la section de ligne de transmission ;
- le mode d'ordre supérieur présente une même symétrie que le mode fondamental ;
- un facteur de mérite (FOM) supérieur ou égal à 150 ps/nm/dB pour une dispersion cumulée dans la fibre supérieure ou égale à 800 ps/nm.

L'invention concerne en outre un système de transmission optique, présentant :
- au moins un émetteur de signaux optiques dans une bande spectrale prédéterminée ;
- au moins une section de ligne de transmission présentant une dispersion chromatique et une pente de dispersion chromatique cumulées négatives ;
- au moins un module selon l'invention placé à une extrémité de la section de ligne de transmission.
   Selon une caractéristique, la section de ligne de transmission comprend au moins une section de fibre de ligne présentant une dispersion chromatique positive et une pente de dispersion chromatique positive, et une au moins section de fibre de compensation de dispersion présentant une dispersion chromatique négative et une pente de dispersion chromatique négative.
   D'autres caractéristiques et avantages de l'invention apparaîtront à la lecture de la description qui suit des modes de réalisation de l'invention, donnés à titre d'exemple et en référence aux dessins annexés, qui montrent
- figure 1, une représentation graphique schématique d'un profil consigne possible pour une fibre de compensation de dispersion selon l'invention;
- figure 2, un schéma représentant un système de transmission optique selon l'invention ;
- figure 3, une représentation graphique du profil consigne d'une fibre de compensation de dispersion selon un premier exemple de réalisation de l'invention ;
- figure 4, une courbe représentant la dispersion chromatique sur la bande C de la fibre de la figure 3 ;
- figure 5, une représentation graphique du profil consigne d'une fibre de compensation de dispersion selon un deuxième exemple de réalisation de l'invention ;
- figure 6, une courbe représentant la dispersion chromatique sur la bande C de la fibre de la figure 5 ;
- figure 7, une représentation graphique du profil consigne d'une fibre de compensation de dispersion selon un troisième exemple de réalisation de l'invention ;
- figure 8, une courbe représentant la dispersion chromatique sur la bande C de la fibre de la figure 7.

Pour rattraper une surcompensation de la dispersion chromatique et de la pente de dispersion chromatique cumulées dans une section de ligne de transmission optique sans introduire de fortes pertes, l'invention propose d'utiliser une fibre optique de compensation multimode présentant un profil d'indice particulier. La surcompensation conduisant à une dispersion chromatique cumulée négative et une pente de dispersion chromatique cumulée négative en bout de ligne, la fibre de l'invention présente, pour un mode d'ordre supérieur, une dispersion chromatique positive et la pente de dispersion chromatique positive avec un facteur de mérite supérieur à 200 ps/nm/dB.

Le fait que la fibre de compensation de dispersion soit utilisée dans un mode de transmission autre que le mode fondamental lui permet d'avoir aux longueurs d'onde considérées une dispersion chromatique positive et une pente de dispersion chromatique positive avec un facteur de mérite important.

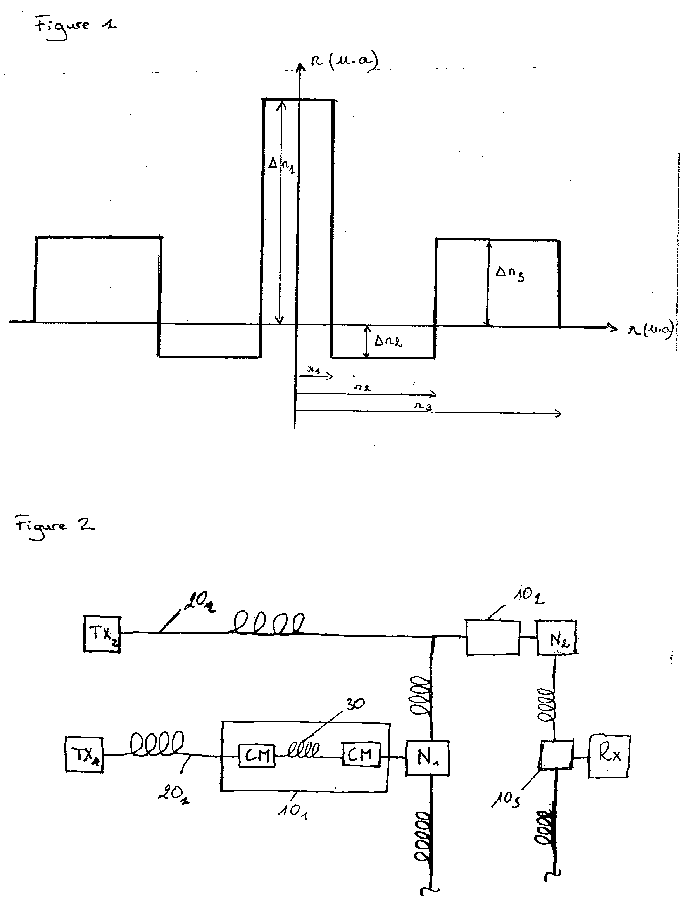

La figure 1 illustre un profil d'indice pour une fibre de compensation de dispersion selon l'invention. Le profil illustré est un profil de consigne, c'est-à-dire représentatif du profil théorique de la fibre, la fibre réellement obtenue après fibrage d'une préforme pouvant présenter un profil sensiblement différent. En outre, bien que non illustrés, d'autres profils d'indice peuvent être envisagés pour une fibre selon l'invention - qui sont reportés dans le tableau présenté plus bas. En particulier, la fibre selon l'invention peut présenter plus de trois tranches dans le coeur et/ou ne pas présenter d'anneau enterré.

La fibre de compensation selon l'invention comprend un coeur central présentant une différence d'indice positive Δn₁ avec une gaine optique externe; une première gaine intermédiaire présentant une différence d'indice positive ou négative Δn₂ avec la gaine externe et un anneau présentant une différence d'indice positive Δn₃ avec la gaine externe. On rappelle que la gaine externe est la gaine n_{g} optique définie précédemment.

La figure 1 montre un profil d'indice avec des tranches du coeur en forme d'échelons; le coeur central pourrait cependant présenter une forme en trapèze ou répondre à une fonction alpha.

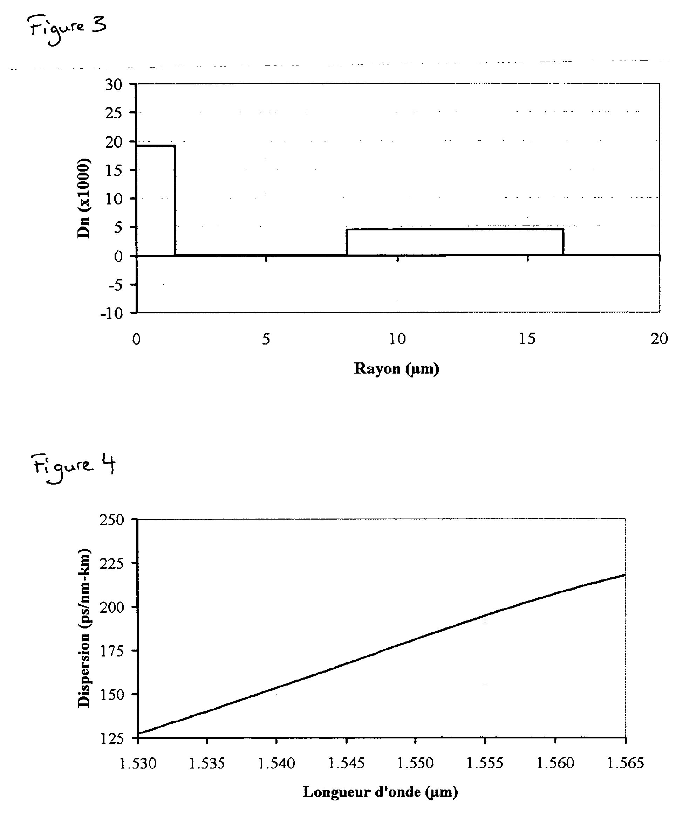

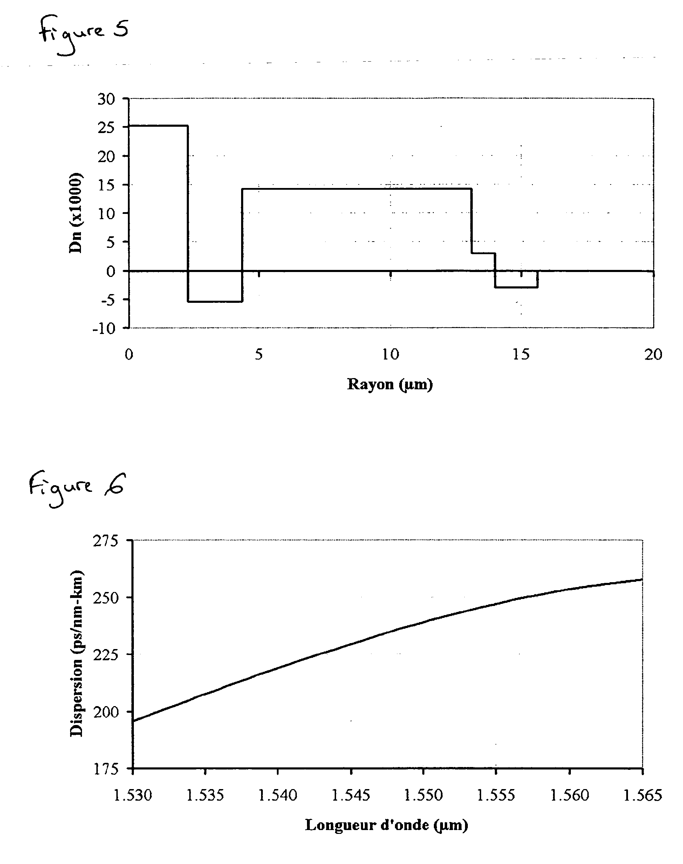

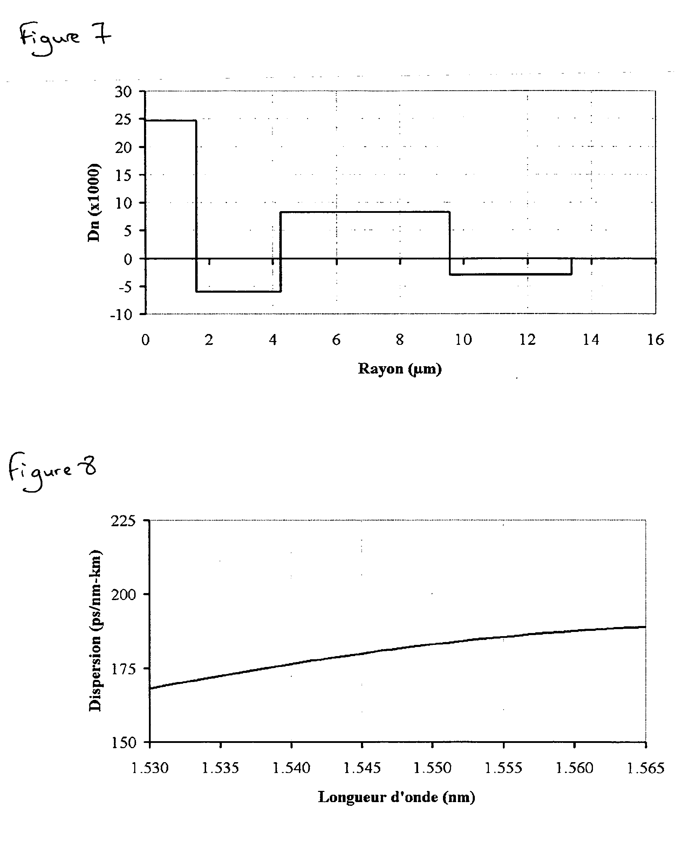

Le tableau I qui suit illustre les caractéristiques de plusieurs profils d'indice possibles pour une fibre de compensation selon l'invention. La première colonne attribue une référence à chaque fibre simulée et les colonnes suivantes indiquent successivement les valeurs des rayons et des différences d'indice de chaque section. Les valeurs d'indices relatifs sont mesurées à la longueur d'onde de 633 nm. Les figures 3, 5 et 7 montrent les profils d'indice de consigne des fibres des exemples 1, 4 et 7 du tableau I.

**Tableau I**

| Fibre | r₁ | Δn₁ | r₂ | Δn₂ | r₃ | Δn₃ | r₄ | Δn₄ | r₅ | Δn₅ |
|---|---|---|---|---|---|---|---|---|---|---|
| | (µm) | (10⁻³) | (µm) | (10⁻³) | (µm) | (10⁻³) | (µm) | (10⁻³) | (µm) | (10⁻³) |
| 0 | 1,69 | 20,2 | 8,40 | 0,4 | 12,98 | 8,4 | 16,39 | 4,1 | | |
| 1 | 1,48 | 19,1 | 8,10 | 0,0 | 16,34 | 4,5 | | | | |
| 2 | 2,46 | 25,0 | 4,60 | -6,0 | 14,11 | 15,0 | | | | |
| 3 | 1,38 | 20,0 | 7,48 | 0,1 | 18,00 | 3,8 | | | | |
| 4 | 2,27 | 25,2 | 4,38 | -5,5 | 13,11 | 14,2 | 14,00 | 3,0 | 15,61 | -3,0 |
| 5 | 1,49 | 19,1 | 7,55 | 0,0 | 16,17 | 4,5 | | | | |
| 6 | 2,04 | 19,4 | 6,50 | 0,1 | 12,68 | 9,8 | | | | |
| 7 | 1,61 | 24,7 | 4,24 | -6,0 | 9,57 | 8,2 | 13,38 | -3,0 | | |
| 8 | 1,39 | 19,9 | 11,00 | 0,3 | 13,90 | 8,0 | | | | |

La fibre de compensation selon l'invention, présentant un profil d'indice tel que décrit ci-dessus, présente pour un mode de propagation autre que le mode fondamental, une dispersion chromatique positive et une pente de la dispersion chromatique positive adaptées à rattraper une surcompensation d'une section de ligne de transmission optique présentant une dispersion chromatique et une pente de la dispersion cumulées négatives.Ainsi, la fibre selon l'invention présente, pour un mode de propagation d'ordre supérieur à une longueur d'onde de 1550 nm, une dispersion chromatique positive supérieure ou égale à 50 ps/nm/km avec une pente de dispersion chromatique positive et un facteur de mérite FOM supérieur ou égal à 200 ps/nm/dB. Plus spécifiquement, la fibre selon l'invention peut présenter une dispersion chromatique positive supérieure ou égale à 150 ps/nm/km à 1550 nm et une pente de dispersion chromatique positive sur l'ensemble de la bande spectrale considérée ; elle est ainsi adaptée à rattraper parfaitement et à moindres pertes une surcompensation introduite dans la ligne de transmission par une gestion de la dispersion visant à réduire les effets non linéaires.

Le mode de propagation d'ordre supérieur peut être le mode LP₀₂, le mode LP₀₃ ou tout autre mode d'ordre supérieur au mode LP₀₁ qui présente de préférence la même symétrie, par exemple circulaire, que le mode fondamental LP₀₁ afin de limiter les pertes induites par les convertisseurs de mode et les effets de polarisation dus aux défauts de géométrie circulaire de la fibre. Mais d'autres modes d'ordre supérieur sont envisageables comme le mode LP₁₁.

La bande spectrale considérée peut être la bande C, s'étendant de 1530 nm à 1565 nm, ou la bande L, s'étendant de 1565 nm à 1625 nm. Les bandes C et L sont les bandes spectrales les plus couramment utilisées dans les systèmes de transmission optique, mais d'autre bandes spectrales peuvent être exploitées, telles que la bande S, s'étendant de 1460 nm à 1530 nm, ou la bande U, s'étendant de 1625 nm à 1675 nm.

En outre, la fibre optique selon l'invention présente un rapport de dispersion chromatique sur la pente de dispersion chromatique supérieur ou égal à 40 nm à une longueur d'onde de 1550 nm. On choisira le DOS de la fibre selon l'invention pour égaliser au mieux le DOS de la section de ligne de transmission afin d'atteindre des valeurs de dispersion et de pente de dispersion sensiblement nulle en bout de section de ligne, c'est-à-dire en entrée d'un récepteur ou d'un noeud du système optique. Une telle valeur de DOS, supérieur ou égal à 40 nm à une longueur d'onde 1550 nm, permet de rattraper la surcompensation de la plupart des sections de lignes de transmission telles que définies plus haut.

Le tableau II qui suit illustre les caractéristiques optiques des fibres de compensation correspondant aux profils d'indice du tableau I. La première colonne reprend les références de la première colonne du tableau I. Les colonnes suivantes fournissent, pour chaque profil de fibre simulé, les valeurs de dispersion chromatique D, de pente de la dispersion chromatique D', de rapport de la dispersion sur la pente de la dispersion DOS, de surface effective A_{eff}, de longueur d'onde de coupure effective λc_{eff-02} pour le mode de propagation d'ordre supérieur LP₀₂, et de facteur de mérite FOM.

Les valeurs de dispersion chromatique D, de pente de la dispersion D', de DOS, de FOM et de surface effective A_{eff} sont données pour le mode de propagation LP₀₂ à une longueur d'onde de 1550 nm. La longueur d'onde de coupure effective λc_{eff-02} correspond à la longueur d'onde à partir de laquelle le signal optique se propageant selon le mode LP₀₂ n'est plus guidé après propagation sur deux mètres de fibre. Le facteur de mérite FOM est défini comme le rapport de la dispersion chromatique D sur l'atténuation du signal en dB/km; les valeurs du FOM sont données pour le mode de propagation LP₀₂ à une longueur d'onde de 1550 nm.

**Tableau II**

| Fibre | D | D' | DOS | A_{eff} | λc_{eff-02} | FOM |
|---|---|---|---|---|---|---|
| | (ps/nm/km) | (ps/nm²/km) | (nm) | (µm²) | (nm) | (ps/nm/dB) |
| 0 | 315 | 6,30 | 50 | 220 | 2400 | > 500 |
| 1 | 180 | 2,77 | 65 | 380 | 2100 | > 300 |
| 2 | 200 | 2,86 | 70 | 295 | 4000 | > 300 |
| 3 | 200 | 2,77 | 125 | 270 | 2100 | > 400 |
| 4 | 240 | 1,78 | 135 | 180 | 3300 | > 300 |
| 5 | 200 | 1,33 | 150 | 235 | 2100 | > 400 |
| 6 | 200 | 0,67 | 300 | 160 | 2500 | > 400 |
| 7 | 185 | 0,57 | 325 | 140 | 2000 | > 250 |
| 8 | 200 | 2,24 | 90 | 240 | 2100 | > 300 |

On constate sur ce tableau II que pour l'ensemble des profils de fibre de compensation selon l'invention, la dispersion chromatique à 1550 nm varie de 180 à 315 ps/nm/km et le DOS est supérieur à 40 nm. Une faible portion de fibre selon l'invention peut donc introduire une forte dispersion avec un DOS équivalent à celui d'une fibre de transmission du type SSMF ou du type NZDSF. Ainsi, lorsqu'une surcompensation est introduite dans une section de ligne, le rattrapage peut être obtenu avec une petite longueur de fibre selon l'invention, par exemple enroulée dans un module en entrée de noeud ou de récepteur.

On constate également que la pente de dispersion chromatique D' est positive à la longueur d'onde de 1550 nm. De plus, les figures 4, 6 et 8 montrent la dispersion chromatique sur l'ensemble de la bande C pour les exemples 1, 4 et 7 du tableau I. On constate que la pente de dispersion chromatique reste bien positive sur l'ensemble de la bande spectrale considérée.

On constate aussi sur le tableau II que la fibre de compensation selon l'invention présente une surface effective A_{eff} supérieure à 140 µm² avec un FOM supérieur à 250 ps/nm/dB et même souvent supérieur à 300 ps/nm/dB. La fibre de compensation selon l'invention présente donc une surface effective A_{eff} nettement plus élevée que celle d'une SSMF ou d'une PSCF (qui est de l'ordre de 80µm²) ce qui permet de mieux combattre les effets non linéaires. Le FOM est également deux à trois fois supérieur aux FOM d'une SSMF ou d'une PSCF. On constate aussi sur ce tableau II que pour l'ensemble des profils, la longueur d'onde de coupure effective pour le mode de propagation LP₀₂ est comprise entre 2000 nm et 4000 nm ; aux longueurs d'onde considérées, le signal se propage donc bien dans la fibre de l'invention selon le mode LP₀₂.

La fibre de compensation selon l'invention est destinée à être utilisée dans un module de compensation dans un système de transmission hauts débits et longue distance présentant une pluralité de sections de ligne de transmission.

Un tel système de transmission est illustré sur la figure 2. Le système selon l'invention comporte au moins un émetteur de signaux optiques Tx₁, Tx₂ pour émettre des signaux optiques multiplexés en longueur d'onde dans une bande spectrale prédéterminée, par exemple la bande C. Les signaux émis se propagent selon un mode fondamental LP₀₁ le long de sections de ligne de transmission optique 20₁, 20₂. Comme définie précédemment, une section de ligne 20 comporte au moins une section de fibre de ligne, par exemple une SMF, présentant une dispersion chromatique positive et une pente de dispersion chromatique positive, et au moins une section de fibre de compensation de dispersion DCF présentant une dispersion chromatique négative et une pente de dispersion chromatique négative.

Un système optique peut simplement relier un émetteur optique Tx à un récepteur optique Rx et/ou présenter une pluralité de noeuds N₁, N₂ qui rassemblent plusieurs sections de ligne 20. Les noeuds du système optique peuvent comporter des amplificateurs optiques et des composants de remise en forme des signaux ainsi que des multiplexeurs pour répartir des signaux reçus vers d'autres sections de lignes de transmission 20. En entrée d'un récepteur optique Rx ou d'un noeud N₁, N₂, il est nécessaire que le signal optique présente une dispersion chromatique et une pente de dispersion cumulées proche de zéro.

A cet effet, le système de transmission optique selon l'invention présente un module de surcompensation de dispersion 10₁, 10₂, 10₃ en entrée de chaque noeud N₁, N₂ ou de récepteur Rx. En effet, le système selon l'invention propose d'introduire une surcompensation dans toutes ou certaines sections de ligne 20 afin de réduire les effets non linéaires. Une section de ligne donnée peut donc présenter une dispersion chromatique et une pente de dispersion chromatique cumulées négatives ; il est alors nécessaire de rattraper cette surcompensation pour arriver à zéro en entré de récepteur ou de noeud optique.

Le module de surcompensation 10 selon l'invention présente un premier convertisseur de mode CM pour convertir le mode fondamental LP₀₁ du signal arrivant de la section de ligne de transmission 20 en mode d'ordre supérieur, par exemple LP₀₂. Le signal de mode d'ordre supérieur se propage alors dans une section de fibre 30 selon l'invention. Le module de surcompensation 10 selon l'invention présente aussi un second convertisseur de mode CM pour convertir le mode d'ordre supérieur en mode fondamental pour réintroduire le signal dans une autre section de ligne 20 ou dans un récepteur. Les premier et second convertisseurs de modes peuvent être obtenus par toute technologie connue, par exemple des réseaux à long pas (LPG pour « Long Period Grating » en anglais) ou des transformateurs spatiaux de lumière.

La fibre 3 selon l'invention peut être enroulée entre les deux convertisseurs CM dans un boîtier du module de surcompensation 10. A cet effet, le profil de la fibre selon l'invention est tel que la fibre présente des pertes en courbures réduites qui n'auront pas d'impact sur les pertes optiques du module 10.

De plus, afin de limiter les pertes optiques et les effets de polarisation dans le module 10, on préférera utiliser un mode d'ordre supérieur ayant la même symétrie que le mode fondamental LP₀₁, c'est-à-dire tous les modes d'ordre supérieur à symétrie circulaire.

On peut ainsi définir un facteur de mérite FOM du module défini comme le rapport de la dispersion chromatique cumulée par la section de fibre selon l'invention placée dans le module sur les pertes optiques globales ; ces pertes comprennent les pertes optiques induites par ladite section de fibre, par les convertisseurs de mode et par les connecteurs. Le module selon l'invention présente un facteur de mérite relativement élevé, supérieur ou égal à 150 ps/nm/dB pour une dispersion cumulée dans la fibre supérieure à 800 ps/nm.

La fibre selon l'invention permet ainsi d'obtenir un module de compensation de dispersion permettant de rattraper efficacement une surcompensation d'une section de ligne de transmission sur l'ensemble de la bande spectrale considérée. On peut ainsi envisager un système optique dans lequel la gestion de la dispersion favorise la surcompensation pour réduire les effets non linéaires, particulièrement importants lorsque le débit de transmission augmente. Des modules de compensation selon l'invention seront répartis dans le système pour rattraper les effets de la surcompensation et optimiser le système de transmission optique.

## Revendications

1. Une fibre optique multimode présentant un profil d'indice tel que, pour un mode de propagation autre que le mode fondamental, la fibre présente, pour une longueur d'onde de 1550 nm :
- une dispersion chromatique positive supérieure ou égale à 50 ps/nm/km ;
- une pente de dispersion chromatique positive,
- un facteur de mérite (FOM) supérieur ou égal à 200 ps/nm/dB.

2. La fibre de la revendication 1, **caractérisée en ce qu'**elle présente, pour un mode d'ordre supérieur à une longueur d'onde de 1550 nm, un rapport de dispersion chromatique sur la pente de dispersion chromatique (DOS) supérieur ou égal à 40 nm.

3. La fibre de la revendication 1 ou 2, **caractérisée en ce qu'**elle présente, pour un mode d'ordre supérieur à une longueur d'onde de 1550 nm, une dispersion chromatique positive supérieure ou égale à 150 ps/nm/km.

4. La fibre de l'une des revendications 1 à 3, **caractérisée en ce qu'**elle présente, pour un mode de propagation d'ordre supérieur, une pente de dispersion chromatique positive sur l'ensemble de la bande spectrale utilisée.

5. La fibre de la revendication 4, **caractérisée en ce que** la bande spectrale est choisie dans la bande C, la bande L, la bande S ou la bande U.

6. La fibre de l'une des revendications 1 à 5, **caractérisée en ce qu'**elle présente, pour un mode de propagation d'ordre supérieur à une longueur d'onde de 1550 nm, une surface effective supérieure ou égale à 100 µm².

7. La fibre de l'une des revendications 1 à 6, **caractérisée en ce qu'**elle présente, pour le mode LP₀₂, une longueur d'onde de coupure effective supérieure à 2000 nm.

8. Un module de compensation de dispersion chromatique adapté à rattraper la surcompensation d'un signal optique se propageant selon un mode fondamental dans une section de ligne de transmission comprenant une fibre de ligne à dispersion chromatique positive et pente de dispersion chromatique positive, le module comprenant :
- un premier convertisseur de mode adapté à convertir le mode fondamental en mode d'ordre supérieur ;
- une section de fibre multimode selon l'une des revendications 1 à 7 ;
- un second convertisseur de mode adapté à convertir le mode d'ordre supérieur en mode fondamental.

9. Le module de la revendication 8, **caractérisé en ce que** le rapport de dispersion chromatique sur la pente de dispersion chromatique (DOS) de la fibre multimode est sensiblement égal au rapport de dispersion chromatique sur la pente de dispersion chromatique (DOS) de la section de ligne de transmission.

10. Le module de la revendication 8 ou 9, **caractérisé en ce que** le mode d'ordre supérieur présente une même symétrie que le mode fondamental.

11. Le module de l'une des revendications 8 à 10, **caractérisé en ce qu'**il présente un facteur de mérite (FOM) supérieur ou égal à 150 ps/nm/dB pour une dispersion cumulée dans la fibre supérieure ou égale à 800 ps/nm.

12. Un système de transmission optique, présentant :
- au moins un émetteur de signaux optiques dans une bande spectrale prédéterminée ;
- au moins une section de ligne de transmission présentant une dispersion chromatique et une pente de dispersion chromatique cumulées négatives ;
- au moins un module selon l'une des revendications 8 à 11 placé à une extrémité de la section de ligne de transmission.

13. Le système de la revendication 12, **caractérisé en ce que** la section de ligne de transmission comprend au moins une section de fibre de ligne présentant une dispersion chromatique positive et une pente de dispersion chromatique positive, et une au moins section de fibre de compensation de dispersion présentant une dispersion chromatique négative et une pente de dispersion chromatique négative.
